# EUROPEAN PATENT APPLICATION

(11) **EP 0 807 779 A1**
(43) Date of publication of application: **19.11.1997**
(21) Application number: 96500061.5
(22) Date of filing: 16.05.1996
(51) Int. Cl.: F16L 19/08

(54) **Coupling system for joining pipes and valves**

(71) Applicant: Lopez Carrion, Francisca, Bonrepos (Valencia) (ES)
(72) Inventor: Lopez Carrion, Francisca, Bonrepos (Valencia) (ES)
(74) Representative: Flaccus, Rolf-Dieter, Dr.

(57) **Abstract**

The couplins comprises two separate parts arranged over each other.

The sealing gasket is a tubular part moulded in a resilient material, its inner configuration (1) being cylindrical save for its lower end which has an inner peripheral shoulder (5) for the pipe (13) to abut against; and externally includes two cylindrical sectors (2 and 4) and an intermediate truncated cone sector (3), with an upper peripheral chamfer (6).

The retaining ring (7) is metallic, arranged over the junction, and seated on its chamfer and may be subject to resilient variations in diameter due to a radial cut (9), having an inner peripheral edge (10) that is embedded into the lateral surface of the pipe, retaining it.

## Description

### OBJECT

The invention constituting the object of this patent application comprises a coupling system for joining pipes and valves.

In particular, it is preferably applicable in liquid fluid lines to connect their valves to the pipes leading into the same.

### BACKGROUND OF THE INVENTION

Quick valve opening or shutting movements in liquid fluid distribution networks result in sudden changes in the rate of flow therein which, if and when an obstacle is encountered, cause the detained liquid mass to hammer against such obstacle, resulting in an impact known in Hydraulics as "surge".

If, as is frequently the case, such obstacle is a shut valve, the surge tends to push it, separating it from the pipe to which it is connected and whose flow it controls.

This is why the connecting means between pipes and valves have to fulfil a twofold objective, namely sealing the junctions and securely and firmly fixing the link.

Connections known heretofore between valves and pipes having the most frequently used diameters have primarily served the first of the objectives aforesaid, caring more about sealing than fixing and relying on the latter being maintained due to a balancing of stresses.

Indeed, this balance exists in straight flow valves wherein the longitudinal axes of the liquid inlet and outlet pipes are in line; it does not however exist in angular (angle) flow valves wherein the axes of the pipes are perpendicular. The surges may in this case gradually separate the valve from the inlet pipe, causing relative slips of the sealing gasket, which shall gradually lose efficiency, and may indeed be lost if and when the pipe is set loose from the valve.

The sealing means used in known and presently used connections are tubular shaped parts moulded in a resilient material (such as polyamide) with a conical outer profile at the end portion seated on the nut which, on tightening such nut, transfers a positive stress onto the pipe and against the valve, ensuring that the gasket is watertight although not that the pipe is fixed so as to withstand axial impacts caused by surges.

### DESCRIPTION OF THE INVENTION

The invention constituting the object of this patent application seeks to eliminate the disadvantages typical of the known coupling system described hereinbefore, and has been conceived and designed to serve such purpose.

The structure of said object has therefore been changed and its functional characteristics hence been improved, converting it into an essentially different object.

Indeed, the new coupling system provides for the existence of two separate parts that are arranged over each other and work together, and are functionally distinguished by their specific purposes, namely sealing the junction and securely and firmly fixing the link between the valve and the pipe through which liquid enters the same.

Both parts will now be separately described.

### a) - Sealing Gasket

This is a tubular part moulded in a resilient material (such as polyamide) whose outer configuration is clearly divided into three portions: two cylindrical end sectors of different diameter joined by a transitional truncated cone sector.

The end of smaller diameter fits into the valve and the end of greater diameter fits into the linking nut, the conical surface being seated upon the edge of the valve inlet mouth.

The cylindrical end of smaller diameter has an internal peripheral step on its edge, against which the inlet pipe abuts upon being inserted when the link is established.

The cylindrical end of greater diameter has a truncated cone chamfer on its edge, for the retaining ring described hereinafter to be seated.

The double conicity of the sealing gasket: an outer one in the sector linking its cylindrical ends, and an inner one at the edge of the end of greater diameter, is the reason why said part is described as a "bicone".

### b) - Retaining Ring

The configuration of this ring is geometrically defined as a solid generated by a square arranged with a vertical and a horizontal diagonal, whose centre moves in a horizontal circumference.

The surface generated by the lower outer side of the square is seated upon the upper truncated cone chamfer of the sealing gasket.

The ring, which is made of a metal harder than tube copper (such as brass) has a radial cut of little width, but sufficient to allow it to make resilient movements to vary its diameter.

With the configuration and arrangement described above, when the linking nut screwed at the valve inlet mouth is tightened, the ring is pressed against its seat on the sealing gasket, forcing it to slip inwards due to the conicity common to their interfaces, thereby to close its radial opening, whereupon the edge described by the inner middle vertex of the square is embedded into the lateral surface of the pipe, working a circumferential crevice into it which retains and fixes it firmly.

### BRIEF DESCRIPTION OF THE DRAWINGS

In order to complete the description of the invention and make the understanding of the formal, structural and functional characteristics of its object easier, drawings are attached which schematically show different features of a preferred embodiment of the coupling system that constitutes the object of the application.

In the drawings:
Figure 1 is a half section of the sealing gasket.
Figure 2 is a cross section of the retaining ring; and figure 3 a plan view thereof.

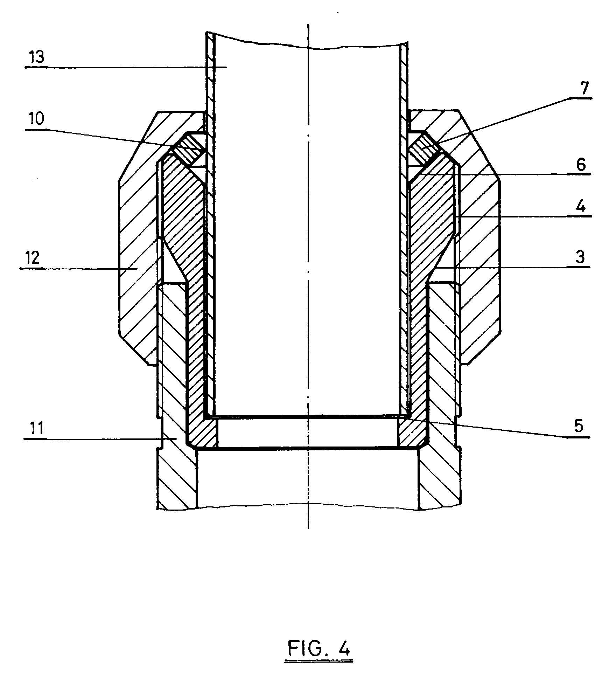

Figure 4 is a cross section of the coupling system as a whole, as mounted in service.

### DESCRIPTION OF A PREFERRED EMBODIMENT

In order to clearly show the nature and scope of the advantageous use of the coupling system which constitutes the object of the new application, its structure and operation will be described below with reference to the drawings which represent a preferred embodiment of said object for informative purposes, which should therefore be considered in the broadest sense and not to limit the use and contents of the invention.

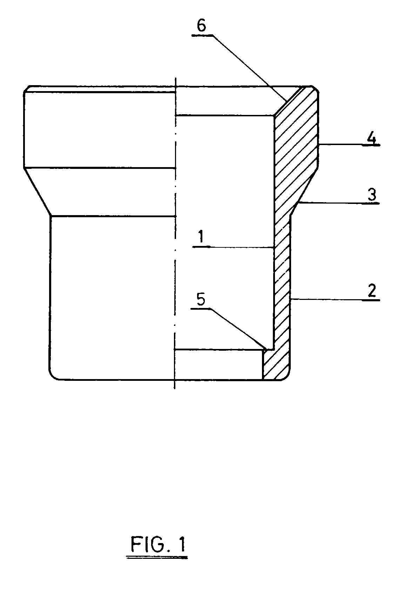

The sealing gasket (see figure 1), moulded in a resilient material, is hollow, its inner cylindrical surface (1) being adjusted to the outer diameter of the pipe (13) with which it is to be coupled, and its outer configuration being divided into three sectors: a cylindrical end sector (2) fitting tightly in the valve (11) inlet mouth; another cylindrical sector (4), of greater diameter, at the opposite end, fitting tightly in the linking nut (12); and a transitional truncated cone sector (3) between both sectors, seated upon the edge of the valve inlet mouth.

The free end of the cylindrical sector of smaller diameter (2) has an inner peripheral step (5) for the coupled pipe (13) to be supported on and abut against; whereas the free end of the cylindrical sector of greater diameter (4) has an inner truncated cone chamfer (6) upon which the retaining ring is seated, to which end the conicity of the interfaces of both parts (gasket and ring) is coincident and preferably of 45°.

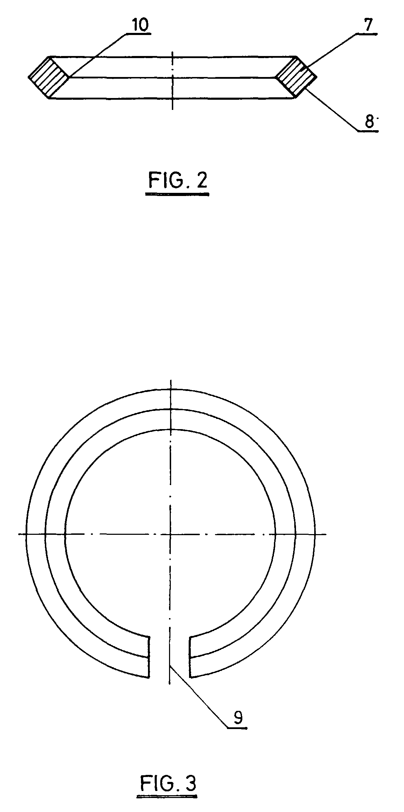

The retaining ring (see figures 2 and 3) is metallic and its configuration is that of a solid generated by a square (7) arranged with one of its diagonals vertical (and consequently the other horizontal), whose centre moves in a horizontal circumference and whose diameter is suitable in order for the surface generated by the lower outer side (8) of the square to be seated upon the inner end chamfer (6) of the sealing gasket, the ring being open by a radial cut (9) to enable it to make resilient movements to vary in diameter, reducing it when pressed by the linking nut (12) between the inlet pipe (13) and the valve (11) against its seat on the chamfer (6) and retrieving its original diameter when the nut is loosened.

When the nut (12) is tightened, the face (8) of the ring slides along the face (6) of the upper chamfer of the sealing gasket due to the conicity common to both faces, the radial opening (9) being thereby closed and the edge described by the inner middle vertex (10) of the square being embedded into the lateral surface of the pipe (13), working a circumferential crevice into it that retains it firmly.

## Claims

1. A coupling system for joining pipes and valves, essentially **characterised** by comprising two separate parts arranged over each other, one of which, being specifically designed to ensure that the junction is sealed, is moulded in a resilient material and has a hollow inner cylindrical configuration (1) and an outer configuration divided into three sectors: a cylindrical end sector (2) fitting tightly in the valve inlet mouth; another cylindrical sector (4), of greater diameter, at the opposite end, fitting tightly in the linking nut; and a transitional truncated cone sector (3) between the above sectors, seated upon the edge of the valve inlet mouth; the free end of the cylindrical sector of smaller diameter (2) has an inner peripheral step (5) for the coupled pipe to be supported on and abut against; whereas the free end of the cylindrical sector of greater diameter (4) has an inner truncated cone chamfer (6).

2. A coupling system for joining pipes and valves, as in claim 1, essentially **characterised** because the retaining ring is metallic and its configuration is that of a solid generated by a square (7) arranged with one of its diagonals vertical whose centre moves in a horizontal circumference and whose diameter is suitable in order for the surface generated by the lower outer side (8) of the square to be seated upon the inner end chamfer (6) of the sealing gasket, to which end the conicity of the interfaces of both parts (gasket and ring) is coincident, the ring being open by a radial cut (9) to enable it to make resilient movements to vary in diameter, reducing it when pressed by the linking nut against its seat on the chamfer (6), causing the face (8) of the ring to slide along the face (6) of the chamfer, the radial opening (9) being thereby closed and the edge described by the inner middle vertex (10) of the square being embedded into the lateral surface of the pipe.
